Europäisches Patentamt

European Patent Office

Office européen des brevets

(11) Veröffentlichungsnummer: **0 071 103**
**A1**

(12) **EUROPÄISCHE PATENTANMELDUNG**

(21) Anmeldenummer: **82106355.9**

(22) Anmeldetag: **15.07.82**

(51) Int. Cl.³: **F 24 J 3/02**
**G 02 B 7/18**

(30) Priorität: **23.07.81 DE 3130471**

(43) Veröffentlichungstag der Anmeldung:
**09.02.83 Patentblatt 83/6**

(84) Benannte Vertragsstaaten:
**AT BE CH DE FR GB IT LI LU NL SE**

(71) Anmelder: **Messerschmitt-Bölkow-Blohm Gesellschaft mit beschränkter Haftung München**
**Robert-Koch-Strasse**
**D-8012 Ottobrunn(DE)**

(72) Erfinder: **Merges, Veit, Ing.grad.**
**Buchenstrasse 33**
**D-8011 Putzbrunn(DE)**

(72) Erfinder: **Hummel, Kurt**
**Lalidererstrasse 5**
**D-8000 München 80(DE)**

(54) Spiegelanordnung zum Reflektieren und Konzentrieren von Strahlungsenergie.

(57) Spiegelanordnungen zum Reflektieren und Konzentrieren von Strahlungsenergie, sog. Heliostaten, weisen ein drehbar gelagertes, aus biegesteifen Trägern (12, 13, 14) bestehendes Traggerüst sowie justierbar mit diesem verbundene Einzelspiegel auf. Um dünnere, leichtere, nicht vorgekrümmte und flexibel justierbare Einzelspiegel verwenden zu können, ist vorgesehen, auf das Traggerüst vorzugsweise mit Dreipunktverbindungen (5) im wesentlichen ebene Tragrahmen (1, 2, 4) aufzusetzen und auf jeden dieser Tragrahmen mehrere biegeelastische, kleinere Einzelspiegel (6) aufzustecken, und zwar mit Hilfe von über die Spiegelfläche verteilten, axial verstellbaren Stiften.

FIG. 2

Croydon Printing Company Ltd.

MESSERSCHMITT-BÖLKOW-BLOHM        Ottobrunn, 16. Juli 1981
        GESELLSCHAFT              BT01 Ell/th
MIT BESCHRÄNKTER HAFTUNG,        9035
        MÜNCHEN

<u>Spiegelanordnung zum Reflektieren und Konzentrieren von
Strahlungsenergie</u>

Die Erfindung betrifft eine Anordnung zum Reflektieren und
Konzentrieren von Strahlungsenergie, mit einem drehbar gelagerten, aus biegesteifen Trägern bestehenden Traggerüst sowie justierbar mit diesem verbundenen Einzelspiegeln.

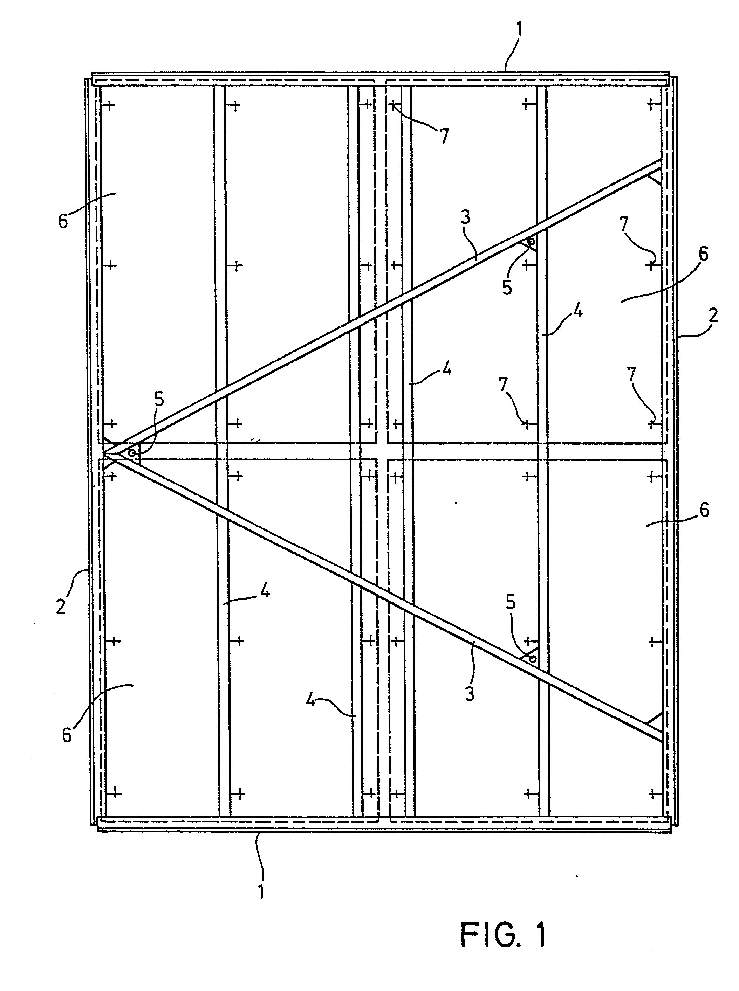

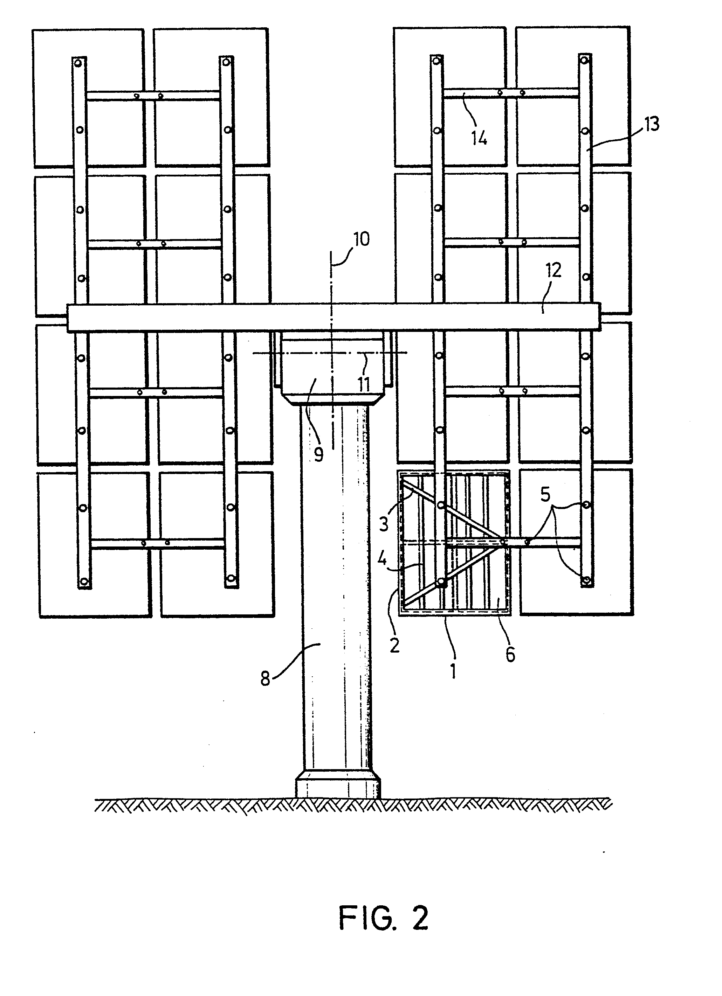

Eine derartige Spiegelanordnung ist aus der DE-OS 28 02 914
bekannt. Dort ist jeder Einzelspiegel mittels elastischer Befestigungselemente an mindestens zwei parallelen Trägerleisten
befestigt, von denen wiederum mehrere an jeweils einem Querträger gehaltert sind. Mehrere derartige Querträger bilden zusammen mit einem drehbar gelagerten Zentralmast und den genannten Trägerleisten ein Traggerüst, das bereits in sich eine gewisse Biegesteifigkeit besitzen muß. Zwar ist in der
DE-OS 28 02 914 davon die Rede, daß dieses Traggerüst eine
gewisse Flexibilität in bezug auf Biegebelastungen aufweisen
müsse, andererseits muß jedoch gewährleistet sein, daß etwa
bei Windbelastung die Fokussierung der Einzelspiegel  nicht
allzu sehr beeinträchtigt wird. Dies wird insbesondere bei
der Ausführungsform gemäß der Fig. 2 deutlich, wo die Einzelspiegel jeweils von nur zwei Trägerleisten gehalten werden, so daß auf die zu beiden Seiten des Zentralmastes liegenden Abschnitte der Querträger bei Windbelastung erhebliche Drehmomente ausgeübt werden. Die Ausrichtung der Einzelspiegel würde somit bei wechselnder Windbelastung
ebenfalls ständig schwanken, wenn die Querträger nicht
mit einer beträchtlichen Biegesteifigkeit ausgeführt wären.
Dasselbe gilt für Zentralmasten. Die Art, wie die Einzelspiegel an dem Traggerüst angebracht sind, setzt nun voraus, daß sie möglichst starr und formbeständig ausgeführt
sind. Dies gilt sowohl für die vorgewölbten Einzelspiegel
der Ausführungsform gemäß der Fig. 1, als auch für die
ebenen Einzelspiegel gemäß Fig. 2. Wären die Spiegel nicht
starr, so könnten sie beispielsweise bei Windbelastung die
gewünschte Oberflächenform nicht beibehalten. Starre Spiegel müssen jedoch mit einer gewissen Dicke und einem entsprechenden Gewicht ausgeführt sein, was sich dann auch
auf das Gewicht des gesamten Gerüsts auswirkt.

Im übrigen folgt aus der Konstruktion der bekannten Spiegelanordnungen, daß die Möglichkeiten der Fokussierung
sehr begrenzt sind. Die starren Einzelspiegel können in
ihrer räumlichen Orientierung durch Verstellung der Befestigungselemente allenfalls leicht gekippt werden. Die vorgegebene Oberflächenform der starren Einzelspiegel ist nicht
weiter beeinflußbar. Insgesamt sind die bekannten Spiegelanordnungen damit durch relativ hohes Gesamtgewicht sowie
mangelnde Flexibilität der Fokussierung gekennzeichnet.

Der Erfindung liegt daher die Aufgabe zugrunde, eine Spiegelanordnung der eingangs genannten Art bereitzustellen,
die möglichst leicht ist und hinsichtlich der Justier- und
Fokussiermöglichkeiten eine hohe Flexibilität aufweist.

Diese Aufgabe wird gemäß der Erfindung dadurch gelöst,
daß die Einzelspiegel mit dem Traggerüst über im wesentlichen ebene Flächen aufspannende, jeweils mindestens einen Einzelspiegel tragende sowie an mindestens drei Punkten
am Traggerüst befestigte Tragrahmen verbunden sind, auf
die die Einzelspiegel jeweils mit Hilfe einer Anzahl axial
verstellbarer, biegeelastischer Stifte aufsetzbar sind.

Die Einzelspiegel werden somit nicht mehr direkt am Traggerüst befestigt, vielmehr werden zwischen beiden Tragrahmen angeordnet, die jeweils vorzugsweise mehrere Einzelspiegel aufnehmen, welche an dem Tragrahmen wiederum
an einer Anzahl von Punkten befestigt sind. An die Stelle
eines Einzelspiegels der bekannten Art tritt nunmehr beispielsweise ein Tragrahmen, der wiederum mehrere erheblich kleinere Einzelspiegel trägt. Diese Struktur bietet die
Möglichkeit, verhältnismäßig sehr dünne und biegeelastische Spiegel zu verwenden. Diese können dann mittels einer
Vielzahl regelmäßig über die Fläche verteilter Stifte durch
unterschiedliche axiale Verstellungen derselben in die gewünschte geometrische Oberflächenform gebracht werden.
Dies ist mit Hilfe von Schablonen leicht durchführbar. Die
Tragrahmen können zunächst verwindungsweich sein, müssen
allerdings so aufgebaut sein, daß sie nach ihrer Befestigung an dem biegesteifen Traggerüst bei den auftretenden
Belastungen ihre Form nicht mehr wesentlich ändern können. Aufgrund des verhältnismäßig geringen Gewichts der
Einzelspiegel sowie der Tragrahmen kann das Traggerüst
für eine geringere Gewichtsbelastung dimensioniert werden.
Es resultiert daher eine Verringerung des Gesamtgewichts
der Spiegelanordnung, obwohl zusätzliche Tragrahmen zwischen den Einzelspiegeln und dem Traggerüst vorhanden
sind.

Die zur Befestigung der Einzelspiegel sowie zu deren Fokussierung dienenden Stifte können gemäß einer vorteilhaften
Weiterbildung der Erfindung einerseits axial verstellbar in an dem jeweiligen Tragrahmen angebrachten Halterungselementen gelagert und andererseits in an den Rückseiten
der Einzelspiegel angebrachte, mit definierten Anschlagflächen versehene Aufnahmestücke einsteckbar sein. Die Stifte
können dann mit Hilfe einer Justierschablone in den Halterungselementen axial so eingestellt werden, daß sich beim
Aufstecken der biegsamen Einzelspiegel bis zum Anstoß der
Stiftenden an die Anschlagflächen der Aufnahmestücke die
gewünschte Oberflächenform der Einzelspiegel ohne weiteres
ergibt. Die den Stiften zugeordnete axiale Richtung ist dabei senkrecht zu der vom Tragrahmen aufgespannten ebenen
Fläche orientiert. Es erweist sich als zweckmäßig, biegeelastische Stifte zu verwenden. Dann können unterschiedliche,
thermisch bedingte Dehnungen von Spiegel und Tragrahmen
leicht von den Stiften ausgeglichen werden, indem sich diese entsprechend durchbiegen. Das gleiche gilt für unvermeidliche Toleranzen bei der Positionierung der Aufnahmestücke sowie der zugeordneten Halterungselemente.

Vorteilhafte Weiterbildungen der Erfindung sind den Unteransprüchen sowie dem folgenden Ausführungsbeispiel zu entnehmen.

Das Ausführungsbeispiel soll anhand der Abbildungen näher erläutert werden. Es zeigen in schematischer Darstellung

Fig. 1 eine Draufsicht auf einen Tragrahmen mit vier aufgesetzten Einzelspiegeln,

Fig. 2 ein Traggerüst mit daran gehalterten Tragrahmen,

Fig. 3 ein Aufnahmestück für einen biegeelastischen Stift
sowie das zugehörige Halterungselement,

Fig. 4 eine weitere Ausführungsform eines Halterungselementes.

In Fig. 1 ist in stark schematisierter Weise ein vier rechteckige Einzelspiegel 6 (gestrichelt dargestellt) tragender
Tragrahmen dargestellt. Der Tragrahmen besteht aus äußeren, seine Rechteckform definierenden Leisten 1, 2 sowie inneren, Verstrebungen bildenden Leisten 4. Zwischen den in
Längsrichtung verlaufenden äußeren Leisten 2 und im Winkel
zueinander sind zwei Stützleisten 3 angeordnet, die an den
äußeren Leisten 2 befestigt sind. Die Leisten 2, 3 sowie 4
sind im Querschnitt U-förmig mit parallel zur Zeichenebene
orientierten Gurten. Die beiden Stützleisten 3 haben eine
etwas größere Profilhöhe als die inneren Leisten 4 und weisen an den Kreuzungsstellen mit diesen Öffnungen auf,
durch welche die Leisten 4 hindurchgeführt sind. Sämtliche
Leisten 1, 2, 3 sowie 4 sind aus beispielsweise feuerverzinktem Stahlblech hergestellt.

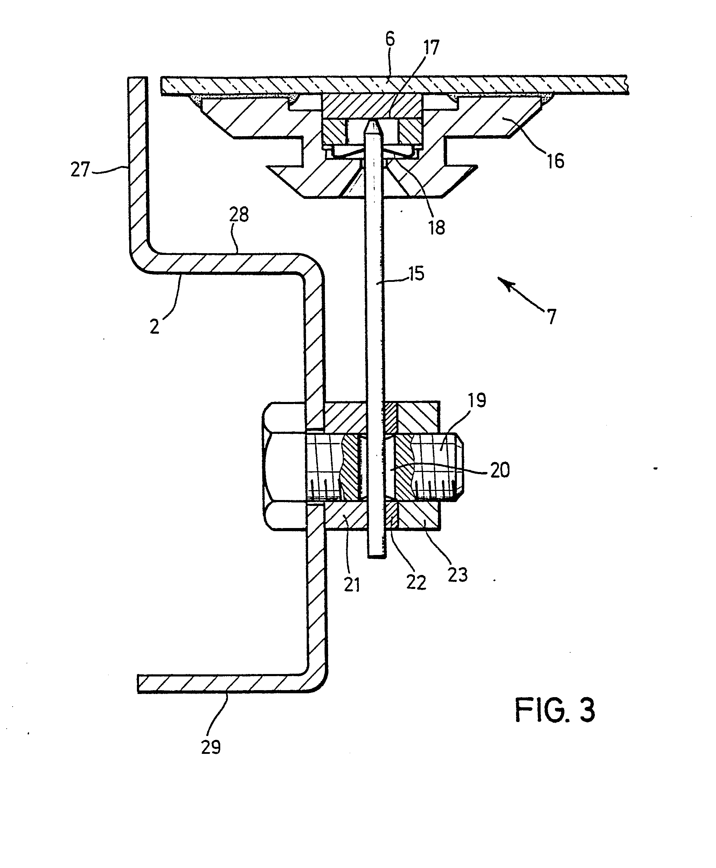

Die Stützleisten 3 sind nicht nur an den äußeren Leisten
2, sondern auch an einer der inneren Leisten 4 befestigt.
An drei Punkten 5 ist der Tragrahmen an dem (in Fig. 1
nicht dargestellten) Traggerüst befestigt. Auf den Tragrahmen sind vier rechteckige, gestrichelt dargestellte Einzelspiegel 6 aufgesetzt, und zwar mit Hilfe von an den Stellen
7 angedeuteten Halterungsvorrichtungen, deren Aufbau aus
Fig. 3 hervorgeht. Die Halterungsvorrichtungen enthalten
axial, d.h. senkrecht zur Zeichenebene verstellbare, biegeelastische Stifte, mit deren Hilfe die biegeelastischen Einzelspiegel in die gewünschte Oberflächenform gebracht werden. Soll beispielsweise eine in Draufsicht konkave Oberfläche erzeugt werden, so wird der zentrale der neun jedem
Einzelspiegel zugeordneten Stifte am weitesten senkrecht zur
Zeichenebene abgesenkt. Die übrigen acht Stifte ragen dagegen um so mehr hervor, je weiter sie von diesem zentralen
Stift entfernt sind. Durch entsprechende axiale Einstellung
der Stifte kann in sehr guter Näherung eine Paraboloidform
erzeugt werden. Die Krümmung der rechteckigen Einzelspiegel wird jedoch im allgemeinen relativ gering sein, da die Spiegelanordnung vorwiegend zum Einsatz in Heliostatfeldern bestimmt ist, bei denen infolge des relativ großen Abstandes vom zentralen Strahlungsempfänger große Brennweiten auftreten.

Die oberen Gurte der U-Profile der äußeren Leisten 2 sind am äußeren Rand senkrecht zur Zeichenebene aufgebogen, wodurch ein Schutz für die entsprechenden Ränder der Einzelspiegel etwa gegenseitliche Stöße gegeben ist. Gleichzeitig bewirken die aufgebogenen Ränder eine Erhöhung der Steifigkeit der Leisten, bei denen aufgrund der U-Profile sowieso bereits eine gewisse Grundsteifigkeit gegeben ist. Die beiden äußeren Leisten 1 werden von je zwei L-Profilen gebildet, deren parallel zur Zeichenebene liegende Schenkel einmal unter die U-Profile der Leisten 2 greifen und zum anderen auf letzteren zu liegen kommen, und deren beide unterschiedlich langen, senkrecht zur Zeichenebene orientierten Schenkel aufeinanderliegen und ähnlich wie bei den Leisten 2 einen senkrecht hochstehenden Rand bilden. Die Ränder der Einzelspiegel sind somit von allen vier Seiten geschützt.

Die Einzelspiegel selber können aus handelsüblichem dünnem Floatglas bestehen, die rückseitig mit Schutzlacken versehen sind. Derartige Spiegel weisen bereits einen Reflektionsfaktor von über 80 % auf. Eine Steigerung der Reflektivität auf über 90 % ist mit, allerdings teureren, Doppelglasspiegeln zu erzielen. Die Verwendung derartiger, relativ dünner und biegeelastischer Spiegel hat neben der Gewichtsersparnis unter anderem den Vorteil, daß sich die durch Temperaturunterschiede bedingte Glasbruchgefahr verringert.

Die Verwendung axial verstellbarer Stifte wirkt sich auch insofern günstig aus, als die Fokussierung erhalten bleibt, wenn ein Spiegel doch einmal brechen sollte und durch einen neuen ersetzt werden muß. Auch der vor dem erstmaligen Aufsetzen der Einzelspiegel vorzunehmende Fokussiervorgang
selbst ist ohne Gefahr des Glasbruchs durchführbar, da entsprechende Schablonen verwendet werden können.

In Fig. 2 ist in stark schematisierter Weise ein sogenannter
Heliostat dargestellt, der eine Spiegelanordnung gemäß der
Erfindung trägt. Die Spiegelanordnung ist von der Rückseite
gezeigt, so daß die reflektierenden Oberflächen der Einzelspiegel dem Betrachter abgewandt sind. Auf einer tragenden
Säule 8 ist ein Getriebeteil 9 angeordnet, das um zwei senkrecht zueinander stehende Achsen 10, 11 drehbar ist, damit
die Spiegel der Sonne nachgeführt werden können. Das Getriebeteil 9 trägt einen Querträger 12, an dem wiederum insgesamt vier Längsträger 13 befestigt sind. Je zwei dieser
Längsträger sind durch jeweils insgesamt vier Trägerleisten
14 verbunden. Der Querträger 12, die Längsträger 13 sowie
die Trägerleisten 14 bilden zusammen ein drehbar gelagertes, biegesteifes Traggerüst. An diesem, genauer an den
Trägerleisten 14 und den Längsträgern 13 sind über Dreipunktlagerungen 5 die Tragrahmen befestigt, die aus den
äußeren Leisten 1, 2 sowie den inneren Leisten 4 und den
Stützleisten 3 bestehen. Auf diese Tragrahmen sind schließlich jeweils vier Einzelspiegel 6 aufgesteckt. Dies ist aus
Gründen der Übersichtlichkeit lediglich an einem der insgesamt sechzehn Tragrahmen genauer dargestellt, und zwar
entsprechend der durch die Fig. 1 gegebenen Rahmenstruktur.

In Fig. 3 ist in schematischer Weise eine mögliche Ausführungsform der Halterungsvorrichtung dargestellt, mit der
die Einzelspiegel an den Tragrahmen befestigt sind. Die Darstellung entspricht einem Schnitt durch die linke der beiden
in Fig. 1 dargestellten äußeren Leisten 2 sowie durch eine
zugehörige Halterungsvorrichtung. Die Leiste 2 hat im Querschnitt ein U-förmiges Profil mit zwei parallelen Gurten 28,
29, wobei an den oberen Gurt 28 ein senkrecht aufgebogener Rand 27 anschließt. An der Unterseite des Einzelspiegels
6 ist ein Aufnahmestück 16 angebracht, beispielsweise angeklebt. In eine entsprechende Öffnung dieses Aufnahmestückes
ist ein eine definierte Anschlagfläche 17 aufweisendes Paßstück eingesetzt. Außerdem ist in die Öffnung eine geschlitzte Klemmscheibe 18 eingelegt. In eine Bohrung der Leiste
2 ist eine mit einer Bohrung 20 versehene Schraube 19 eingeschoben, die mittels einer Mutter 21 festgehalten wird. Ein
biegeelastischer Stift 15 ist in die Bohrung 20 eingeschoben,
und wird mittels einer Zwischenlegscheibe 22 sowie einer
weiteren Mutter 23 arretiert. Der Spiegel 6 mit dem Aufnahmestück 16 ist auf den Stift bis zu dessen Berührung mit der
Anschlagfläche 17 aufgesteckt. Beim Aufstecken dringt die
Stiftspitze in den Schlitz der Klemmscheibe 18 ein, kann
aber nicht ohne weiteres aus dieser zurückgezogen werden.
So erhält der Spiegel an der jeweiligen Halterungsstelle eine
definierte Position.

Das Aufnahmestück 16 kann beispielsweise aus Aluminium-
Druckguß oder Kunststoff gefertigt sein, der biegeelastische
Stift 15 aus rostfreiem Stahl hoher Festigkeit bestehen. Um
den Stift aus dem Schlitz der Klemmscheibe 18 zu lösen,
braucht lediglich ein entsprechend geformtes Spezialwerkzeug
in die zentrale Öffnung des Aufnahmestückes eingeführt und
ein nach oben gerichteter Druck auf die Schlitzränder ausgeübt zu werden. Die Entfernung der Einzelspiegel ist damit
denkbar einfach, ebenso wie eine eventuell gewünschte Neujustierung der axial verstellbaren Stifte sowie das Wiederaufsetzen der Einzelspiegel.

Wie in Fig. 3 dargestellt, wird der Stift 15 im Aufnahmestück 16 lediglich durch die Ränder der Klemmscheibe 18 gehalten. Außerdem weist die zentrale Öffnung des Aufnahmestückes, in die der Stift eingeführt wird, eine trichterförmige Erweiterung auf. Diese Konstruktion bringt es mit sich, daß der Stift in dem Aufnahmestück quasi wie mit einem Kugelgelenk gelagert ist und somit nahezu keine Momente auf den Spiegel übertragen werden.

Die in Fig. 3 mit 20 bezeichnete Bohrung kann durch einen in einer Axialebene liegenden Schlitz ersetzt sein, in den der Stift 15 eingeschoben und der mit Hilfe einer Überwurfmutter oder Schraubkappe zusammengepreßt wird.

MESSERSCHMITT–BÖLKOW–BLOHM    Ottobrunn, 16. Juli 1981
GESELLSCHAFT    BT01 Ell/th
MIT BESCHRÄNKTER HAFTUNG,    9035
MÜNCHEN

Spiegelanordnung zum Reflektieren und Konzentrieren von
Strahlungsenergie

P a t e n t a n s p r ü c h e

1. Spiegelanordnung zum Reflektieren und Konzentrieren von
Strahlungsenergie, mit einem drehbar gelagerten, aus biegesteifen Trägern bestehenden Traggerüst sowie justierbar
mit diesem verbundenen Einzelspiegeln, dadurch   g e -
k e n n z e i c h n e t, daß die Einzelspiegel (6) mit
dem Traggerüst über im wesentlichen ebene Flächen aufspannende, jeweils mindestens einen Einzelspiegel tragende sowie an mindestens drei Punkten (5) am Traggerüst
befestigte Tragrahmen (1, 2, 4) verbunden sind, auf die
die Einzelspiegel jeweils mit Hilfe einer Anzahl axial verstellbarer Stifte (15) aufsetzbar sind.

- 2 -

0071103

2. Spiegelanordnung nach Anspruch 1, dadurch g e -
k e n n z e i c h n e t , daß die Stifte (15) einerseits
axial verstellbar in an den jeweiligen Tragrahmen (1, 2,
4) angebrachten Halterungselementen (19) gelagert und
andererseits in an den Rückseiten der Einzelspiegel angebrachte, mit definierten Anschlagflächen (17) versehene
Aufnahmestücke (16) einsteckbar sind.

3. Spiegelanordnung nach Anspruch 2, dadurch g e -
k e n n z e i c h n e t , daß die Aufnahmestücke (16)
mit geschlitzten Klemmscheiben (18) versehen sind, in die
die Stifte (15) einsteckbar sind.

4. Spiegelanordnung nach Anspruch 2, dadurch g e -
k e n n z e i c h n e t , daß die Halterungselemente
(19) Bohrungen (20) oder Schlitze aufweisen, in die die
Stifte (15) einklemmbar sind.

5. Spiegelanordnung nach einem der Ansprüche 1 bis 4, dadurch g e k e n n z e i c h n e t , daß die Stifte
(15) biegeelastisch sind.

6. Spiegelanordnung nach einem der Ansprüche 1 bis 5, dadurch g e k e n n z e i c h n e t , daß die Tragrahmen aus Leisten (1, 2, 4) mit U-förmigem Profil aufgebaut sind, dessen beide Gurte (28, 29) parallel zu der
vom jeweiligen Tragrahmen aufgespannten ebenen Flächen
orientiert sind.

7. Spiegelanordnung nach einem der Ansprüche 1 bis 6, dadurch g e k e n n z e i c h n e t , daß die Tragrahmen aus die Rahmenform definierenden, äußeren Leisten
(1, 2) und Verstrebungen zwischen den äußeren Leisten
(4) bildenden, inneren Leisten bestehen.

8.  Spiegelanordnung nach Anspruch 7, dadurch  g e -
    k e n n z e i c h n e t , daß die äußeren Leisten (1,
    2) bezüglich der vom Tragrahmen aufgespannten ebenen
    Fläche senkrecht aufgebogene Ränder (27) aufweisen.

9.  Spiegelanordnung nach Anspruch 7, dadurch  g e -
    k e n n z e i c h n e t , daß an den äußeren Leisten
    (1, 2) eines Tragrahmens zwischen jenen und im Winkel
    zueinander verlaufende, mit Öffnungen für die sie kreuzenden inneren Leisten (4) versehene Stützleisten (3) befestigt sind, die mit den inneren Leisten an ausgewählten
    Kreuzungsstellen verbunden sowie an letzteren und/oder
    an den Befestigungsstellen mit den äußeren Leisten an
    dem Traggerüst befestigt sind.

FIG. 1

FIG. 2

035

FIG. 3

0071103
Nummer der Anmeldung

Europäisches
Patentamt

**EUROPÄISCHER RECHERCHENBERICHT**

EP 82 10 6355.9

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE – A1 – 2 901 002 (SENER) <br> * Fig. 3, 4 * <br> –– | 1 | F 24 J 3/02 <br> G 02 B 7/18 |
| A | DE – A1 – 2 738 857 (MASCHINENFABRIK AUGSBURG–NÜRNBERG AG) <br> * Seite 9, Absätze 2, 3 * <br> –– | 1 | |
| A | DE – A1 – 2 738 859 (MASCHINENFABRIK AUGSBURG–NÜRNBERG AG) <br> * Seite 6, Absatz 4 bis Seite 8, Absatz 2 * <br> –– | 1 | **RECHERCHIERTE SACHGEBIETE (Int. Cl.³)** |
| A | FR – A1 – 2 411 648 (HAMEURY et al.) <br> * Seite 2, Zeile 35 bis Seite 3, Zeile 9 * <br> –– | 1,2 | F 24 J 3/00 <br> G 02 B 7/00 |
| A | FR – A1 – 2 406 214 (SAINT-GOBAIN INDU-STRIES) <br> * Seite 3, Zeile 15 bis Seite 4, Zeile 32 * <br> ––––– | 1,2 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | | |
|---|---|---|---|
| Recherchenort <br> Berlin | Abschlußdatum der Recherche <br> 13-10-1982 | Prüfer <br> PIEPER | |

EPA form 1503.1   06.78